# FASCICULE DE BREVET EUROPEEN

(11) **EP 1 232 492 B1**
(45) Date de publication et mention de la délivrance du brevet: **10.12.2003**
(21) Numéro de dépôt: 98952493.9
(22) Date de dépôt: 17.11.1998
(51) Int. Cl.: G10L 15/16

(54) **RESEAU NEURONAL ET SON APPLICATION POUR LA RECONNAISSANCE VOCALE**
NEURONALES NETZWERK UND SEINE ANWENDUNG FÜR DIE SPRACHERKENNUNG
NEURAL NETWORK AND ITS USE FOR SPEECH RECOGNITION

(30) Priorité: 01.09.1998 EP 98810867
(43) Date de publication de la demande: 21.08.2002
(73) Titulaire: Swisscom AG, 3000 Bern 29 (CH)
(72) Inventeur: VAN KOMMER, Robert, CH-1752 Villars-sur-Glâne (CH)
(74) Mandataire: BOVARD AG - Patentanwälte
(86) Numéro de dépôt international: CH9800495
(87) Numéro de publication internationale: WO00013170

(56) Documents cités:
- WO-A-97/29437
- US-A- 5 220 640

## Description

La présente invention concerne un système de reconnaissance vocale. La présente invention concerne plus particulièrement un bloc logique et un système de reconnaissance vocale à l'aide d'un réseau neuronal. La présente invention concerne cependant également un réseau neuronal nouveau pour des applications autres que la reconnaissance vocale.

Des méthodes de reconnaissance vocale performantes sont d'une importance cruciale en particulier pour le développement de nouveaux services de télécommunication. Les qualités requises d'un système de reconnaissance vocale sont notamment les suivantes :

Précision - des systèmes permettant de reconnaître correctement moins qu'un pourcentage très élevé, par exemple moins de 85 pour-cent, des mots n'ont que peu d'applications pratiques.

Insensibilité au bruit - les systèmes doivent permettre une reconnaissance satisfaisante même dans un milieu bruité, par exemple lorsque les communications sont transmises à travers un réseau téléphonique mobile.

Vocabulaire important - pour beaucoup d'applications, il est nécessaire de pouvoir reconnaître un nombre de mots différents élevés - par exemple plus de 5000.

Indépendance du locuteur - beaucoup d'applications exigent une reconnaissance satisfaisante quel que soit le locuteur, et même pour des locuteurs inconnus du système.

Les systèmes de reconnaissance de parole connus effectuent généralement deux tâches distinctes. Une première tâche consiste à convertir la voix en un signal numérique, et à extraire une suite de vecteurs de paramètres de voix à partir de ce signal numérique. Différents systèmes sont connus pour effectuer cette tâche, qui permettent généralement de convertir chaque trame de par exemple 10 millisecondes de voix en un vecteur (« features vector ») contenant un ensemble de paramètres décrivant au mieux cette trame dans le domaine temporel et fréquentiel.

La seconde tâche consiste à classer la suite de vecteurs reçue au moyen d'un classificateur, et à établir à quelle classe (correspondant par exemple à des éléments phonologiques tels que phonèmes, mots ou phrases par exemple) ils correspondent avec la plus grande probabilité, parmi les classes définies au cours d'une phase d'entraînement du système. Le problème des classificateurs est donc de déterminer, pour chaque vecteur vocal introduit, la probabilité d'appartenance à chaque classe définie.

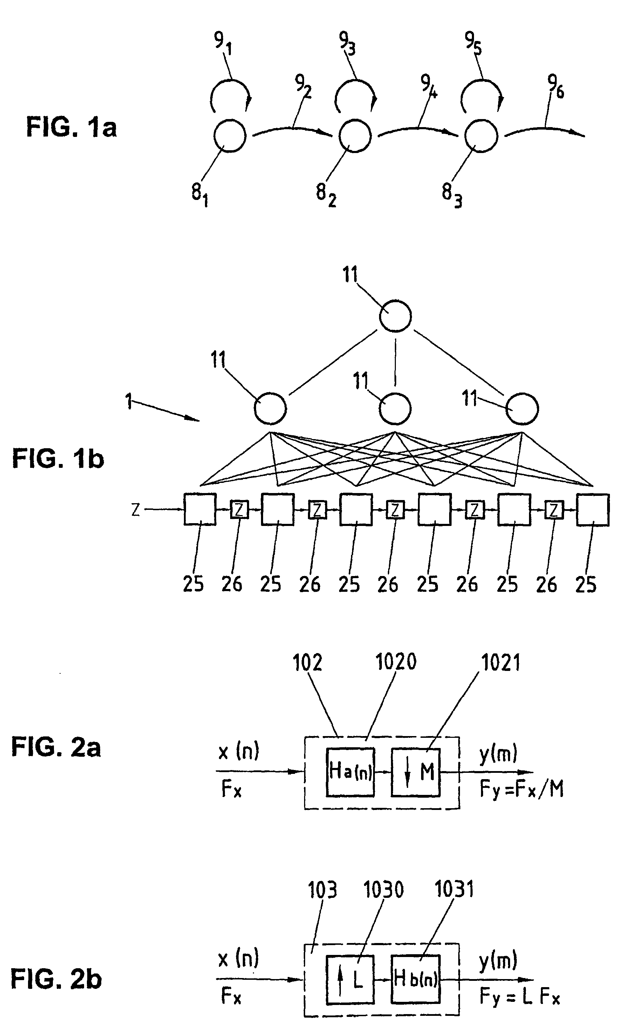

Les systèmes de reconnaissance vocale les plus répandus à l'heure actuelle utilisent un classificateur fonctionnant à l'aide de modèles de Markov cachés, plus connus sous la désignation anglo-saxonne Hidden Markov Models (HMM), et illustrés par la figure 1a. Cette méthode statistique décrit la voix par une séquence d'états de Markov 8₁, 8₂, 8₃. Les différents états sont reliés par des liens 9₁-9₆ indiquant les probabilités de transition d'un état à l'autre. Chaque état émet, avec une distribution de probabilité donnée, un vecteur de voix. Une séquence d'état définie à priori représente une unité phonologique prédéfinie, par exemple un phonème ou un triphone. Une description de ce procédé est donnée par exemple par Steve Young dans un article intitulé « A Review of Large-vocabulary Continuous-speech Recognition », paru en septembre 1996 dans le IEEE Signal Processing Magazine. En dépit d'une modélisation très pauvre des relations temporelles entre vecteurs vocaux successifs, cette méthode offre actuellement les meilleurs taux de reconnaissance.

D'autres systèmes de classification ayant permis d'obtenir certains succès utilisent des réseaux de neurones artificiels, tels qu'illustrés sur la figure 1b, notamment des réseaux de neurones à retard temporel (TDNN - Time Delay Neural Networks) ou des réseaux de neurones récurrents (RNN - Recurrent Neural Network). Des exemples de tels systèmes sont notamment décrits par J. Ghosh et al. dans « Classification of Spatiotemporal Pattems with Applications to Recognition of Sonar Sequences », dans Neural Representation of Temporal patterns, pages 227 à 249, édité par E. Covey et al., Plenum Press, New York, 1995. Tous ces systèmes utilisent une ligne à retard comprenant des registres 25 pour les vecteurs vocaux 2 introduits ainsi que des éléments à retard 26 dans leur architecture. Des éléments de calcul 11 (neurones) interconnectés (au moyen de synapses) avec les registres 25 et organisés de manière hiérarchique permettent d'identifier des éléments phonologiques particuliers. Ces systèmes permettent ainsi de modéliser la relation temporelle entre l'information précédente et l'information courante, et de corriger certaines des faiblesses des HMMs, sans avoir pourtant réussi à les remplacer complètement.

Une approche plus récente consiste à combiner des HMMs avec des réseaux neuronaux dans des systèmes de reconnaissance de voix hybrides. De tels systèmes sont décrits par exemple par H. Bouriard et al. dans « Connectionist Speech Recognition - A Hybrid Approach », 1994, Kluwer Academic Publishers (NL). Ces systèmes présentent l'avantage d'une meilleure modélisation de contexte et des phonèmes que les HMMs. Le prix à payer pour ces systèmes est toutefois, soit un long temps d'entraînement dû à l'algorithme de propagation inverse d'erreur (EBP - Error Back Propagation) utilisé, ou un nombre limité de coéfficients de pondération disponibles pour modéliser les signaux de voix.

Une autre approche est divulguée dans le brevet américain No. US 5,220,640 du 15 juin 1993. Ce document décrit une architecture de réseau neuronal, par lequel le signal d'entrée a été différemment changé d'échelle par un "time-scaling network". Les signaux de sortie indiquent comment les signaux entrants qui ont été changés d'échelle correspondent aux schémas étudiés.

Ces différents systèmes modélisent généralement chaque mot comme une suite de phones, et sont optimisés pour identifier le plus précisément possible chaque phone dans un signal vocal. Une identification correcte de chaque phone assure en principe une reconnaissance parfaite de mots ou de phrases - pour autant que ces mots et ces phrases soient correctement modélisés. En pratique, tous ces systèmes présentent l'inconvénient d'un manque de robustesse dans des conditions bruyantes ou de résultats de qualité variable, comme indiqué notamment par S. Greenberg dans « On the origins of speech intelligibility in the real world », ESCA-NATO tutorial and research Workshop on Robust Speech Recognition for Unknown Communication Channels, 17-18 April 1997, Pont-à-Mousson, France, et par Steve Young dans l'article indiqué plus haut.

Un but de la présente invention est donc de proposer un système et une méthode de reconnaissance vocale qui évitent les inconvénients des systèmes et des méthodes de l'art antérieur. Plus particulièrement, un but de la présente invention est de proposer un classificateur et une méthode de classement de vecteurs de voix améliorés par rapport aux classificateurs et aux méthodes de classement de l'art antérieur.

Un autre but de la présente invention est d'améliorer les performances d'un classificateur sans en augmenter sensiblement la complexité, en particulier sans augmenter sensiblement le nombre d'éléments de calcul.

Selon l'invention, ces différents buts sont atteints grâce aux caractéristiques des revendications indépendantes, des variantes préférentielles étant par ailleurs indiquées dans les revendications dépendantes.

L'invention part de la constatation que la voix est davantage qu'une succession linéaire de phones d'importance égale pour la reconnaissance. Des expériences ont montré que même des auditeurs expérimentés peinent à identifier plus de 60% de phones présentés en isolation ; seul le contexte permet au cerveau humain de comprendre des phrases et d'identifier, à posteriori, chaque phone.

L'invention tire parti de cette découverte pour suggérer d'intégrer, pour la reconnaissance de parole, des caractéristiques de segments de voix beaucoup plus longs que ce qui était fait dans l'art antérieur - par exemple des caractéristiques de plusieurs syllabes, de tout un mot, voire de plusieurs mots ou même d'une phrase entière.

Afin d'éviter d'augmenter la complexité du système et le nombre d'éléments de calcul, une architecture hiérarchique est proposée, avec un système en plusieurs niveaux. Chaque niveau comporte au moins un réseau neuronique spatiotemporel (STNN - Spatiotemporal Neural Network). La cadence des signaux introduits dans les différents niveaux du système est variable, en sorte que la cadence des vecteurs vocaux introduits dans le niveau inférieur est par exemple adaptée à la reconnaissance de phones isolés, ou d'autres éléments phonologiques brefs, tandis que la cadence des signaux appliqués sur des niveaux supérieurs permet par exemple la reconnaissance d'éléments phonologiques plus longs - par exemple de syllabes, de triphones, de mots ou même de phrases entières. Des décimateurs sont prévus dans au moins un niveau pour réduire la cadence des signaux appliqués aux niveaux supérieurs. Inversement, des interpolateurs sont prévus pour augmenter la cadence des signaux cibles fournis au système durant la phase d'apprentissage.

L'invention propose ainsi une architecture de réseaux neuronaux à cadence multiple, utilisant des opérateurs de décimation et d'interpolation dans leur architecture. L'invention permet de réaliser avec un nombre d'éléments de calcul (neurones) et de synapses limité un réseau neuronal dont la sortie est fonction d'un nombre important de vecteurs vocaux et/ou dont la capacité d'apprentissage est accrue.

L'invention permet en outre de pondérer l'importance de différents segments de voix (trames), et de classer chaque vecteur vocal en fonction d'un nombre important de vecteurs antérieurs.

L'invention sera mieux comprise à l'aide de la description donnée à titre d'exemple et illustrée par les figures annexées qui montrent :
La figure 1a de manière schématique la structure d'un modèle de Markov caché.
La figure 1b de manière schématique la structure d'un réseau de neurones artificiels.
La figure 2a un schéma-bloc d'un opérateur de décimation.
La figure 2b un schéma-bloc d'un opérateur d'interpolation.
La figure 3 de manière schématique la structure d'un niveau de réseau de neurones à cadence multiple, selon l'invention.
La figure 4 un premier exemple, illustré schématiquement, de réseau de neurone à cadence multiple et à plusieurs niveaux selon l'invention.
La figure 5 un deuxième exemple, illustré de manière plus détaillée, de réseau de neurone à cadence multiple et à plusieurs niveaux selon l'invention.
La figure 6 illustre de manière schématique un élément de calcul (neurone) conventionnel.

Bien que la description qui suit décrive plus en détail le cas particulier d'un réseau de neurones artificiels utilisé pour la reconnaissance de parole, l'homme du métier comprendra que le type de réseaux de neurones revendiqué peut aussi trouver d'autres applications, notamment pour l'identification de locuteur ou pour d'autres tâches non nécessairement liées au traitement de la parole, en particulier lorsque le contenu de l'information à analyser peut être classé hiérarchiquement.

Selon l'invention, la reconnaissance de parole est effectuée au moyen d'un réseau de neurones dans lequel au moins un élément de calcul (ou neurone) comprend un opérateur de décimation 102, tel qu'illustré schématiquement sur la figure 2a. La fonction de l'opérateur de décimation est de convertir un signal d'entrée numérique x(n) avec une cadence (fréquence d'échantillonnage) Fₓ en un signal de sortie numérique y(m) avec une cadence F_{y} réduite par un facteur entier M.

Admettons que le signal d'entrée x(n), de cadence Fₓ, a un spectre X(ω) et doive être sous-cadencé par un facteur entier M. Si X(ω) est différent de zéro dans l'intervalle de fréquence 0 ≤ |F| ≤ Fₓ/2, on sait de la théorie des signaux que le signal obtenu en sélectionnant uniquement chaque M-ième valeur du signal x(n) est une version repliée sur elle-même de x(n), avec une fréquence de repli de Fₓ/2M. Pour éviter le repli, il est donc nécessaire de réduire au préalable la bande passante de x(n) par un facteur M : Fₘₐₓ= Fₓ/2M. Cette opération est par exemple effectuée par le filtre de décimation 1020 avec une fonction de transfert Hₐ(n) de type passe-bas. Le décimateur 102 comprend ensuite un opérateur de sous-échantillonnage 1021 qui sélectionne uniquement chaque M-ième valeur et fournit un signal y(m) à une cadence F_{y} correspondant à la cadence Fₓ du signal d'entrée x(n) divisée par M. Le décimateur 102 ne doit donc pas être confondu avec un simple opérateur de sous-échantillonnage (down-sampler).

La fonction de transfert Hₐ(n) du filtre 1020 peut aussi être choisie de manière à effectuer d'autres types de filtrage sur le signal de sortie, par exemple de manière à améliorer le rapport signal sur bruit, à supprimer les échos, etc..

D'autres moyens de réaliser un décimateur existent et peuvent également être utilisés dans le cadre de cette invention. On utilise notamment de tels décimateurs dans les bancs de filtrage numérique, tels que décrits par M. Vetterli et al. dans « Wavelets and Subband Coding », Prentice Hall, Englewood Cliffs, NJ07632. Les décimateurs les plus connus utilisent par exemple une analyse dans le domaine temporel, dans le domaine de modulation ou de type polyphase.

Le réseau de neurones artificiels de l'invention comprend en outre de préférence un nombre équivalent d'interpolateurs 103, tels qu'illustrés sur la figure 2b. La fonction des interpolateurs 103 est de convertir des signaux numériques x(n) à une cadence Fₓ en signaux y(m) de cadence supérieure F_{y}=LFₓ. Pour des raisons symétriques à celles expliquées ci-dessus, un filtrage du signal numérique obtenu par le suréchantillonneur 103 est nécessaire et est effectué au moyen d'un filtre d'interpolation 1031 avec une fonction de transfert H_{b}(n).

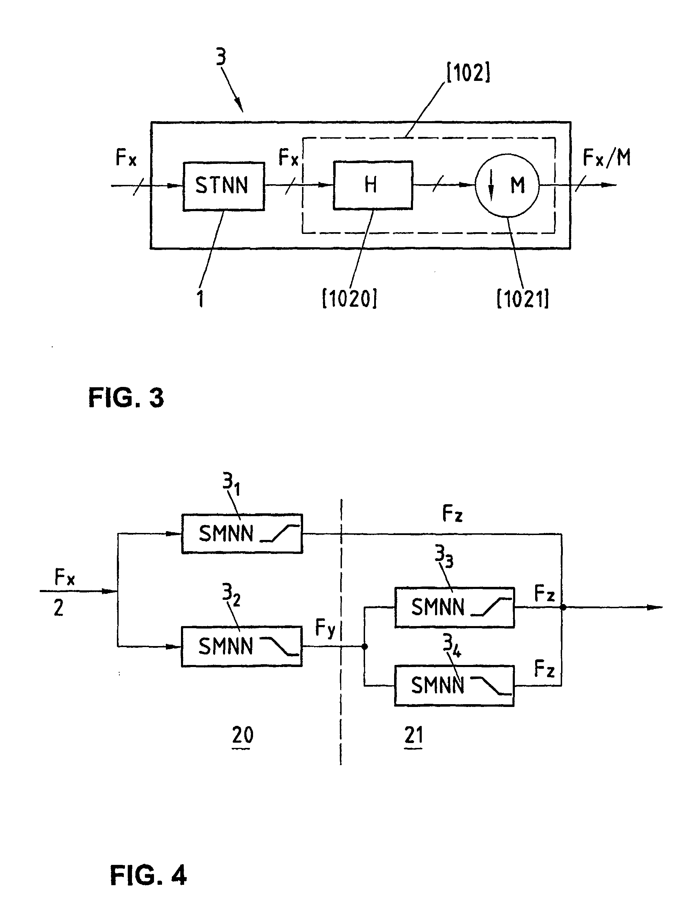

La figure 3 illustre de manière schématique un bloc de réseau neuronal auto-modularisable 3 SMNN (Self Modularization Neural Network) selon l'invention, constituant par exemple un niveau complet ou un bloc d'un classificateur complet selon l'invention. Le SMNN 3 comprend un réseau neuronal spatiotemporel STNN 1 de n'importe quel type, par exemple du type illustré sur la figure 1b. Le STNN 1 peut aussi être constitué par un perceptron multicouches à réponse impulsionnelle finie ou infinie (IIR/FIR MLP - Infinite/Finite Multilayer Perceptron), un réseau neuronal à retard temporel TDNN, un réseau neuronal récurrent, un réseau Gamma, etc.., et comprend de manière générale un ensemble d'éléments de calcul, ou neurones, 11. Le STNN 1 reçoit en entrée un signal, par exemple une séquence de vecteurs vocaux ou un signal délivré par un autre niveau du réseau neuronal, avec une cadence Fₓ, et délivre en sorte un autre signal, par exemple un vecteur de paramètres calculés, avec la même cadence Fₓ. Selon l'invention, le SMNN 3 comprend en outre une unité de décimation [102], comprenant par exemple autant de décimateurs 102 que de paramètres dans le vecteur de sortie, et permettant de réduire la cadence du signal calculé par le STNN. Chaque décimateur 102 dans l'unité de décimation [102] est constitué par exemple de la manière illustrée sur la figure 2a et comporte un filtre de décimation 1020 et un sous-échantillonneur 1021, en sorte que le SMNN 3 délivre en sortie un vecteur avec une cadence Fₓ/M réduite par M.

La figure 4 illustre un exemple de classificateur réalisé à partir de blocs SMNN (comprenant des décimateurs) selon l'invention. Ce classificateur comporte quatre SMNN 3₁-3₄ répartis sur deux niveaux 20 et 21. La séquence de vecteurs vocaux 2 extraite du signal vocal à analyser est introduite simultanément dans deux SMNN 3₁, 3₂ dont l'un comporte un filtre passe-haut et l'autre un filtre passe-bas. Les deux SMNN effectuent une décimation avec un facteur de décimation différent, en sorte que la cadence du signal issu du SMNN supérieur 3₁ est de F_{z} tandis que la cadence du signal de l'autre SMNN 3₂ est de F_{y}.

Le signal cadencé à F_{y} est lui même introduit dans deux SMNN 3₃-3₄ dans le second niveau 21 du système de l'invention, délivrant chacun un signal de sortie cadencé à F_{z} et pouvant avoir des filtres avec des fonctions de transfert différentes. Les signaux délivrés par les SMNN 3₁, 3₃ et 3₄ sont ensuite combinés en un seul vecteur de sortie cadencé à F_{z}.

Le système de l'invention peut être entraîné au moyen de vecteurs cibles appliqués au cours d'une phase d'apprentissage sur la sortie d'un algorithme de propagation inverse d'erreur EBP (Error Back Propagation) de type connu. Il est possible soit d'imposer des vecteurs cibles à la sortie de chaque niveau 20, 21, etc.. (ou d'une partie de ces niveaux seulement), soit à la sortie globale du système au-dessus du niveau d'ordre supérieur. Dans ce dernier cas, il est nécessaire de prévoir des interpolateurs 103 (figure 2b) dans les SMNN 3 afin de multiplier la cadence des vecteurs cibles imposés aux niveaux inférieurs.

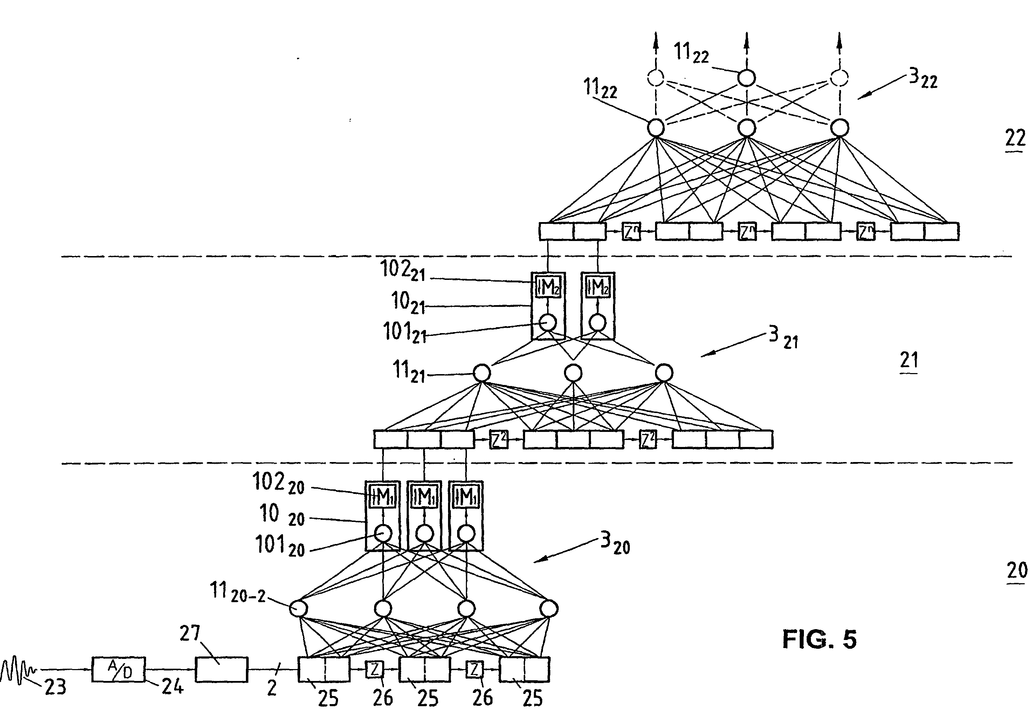

La figure 5 illustre de manière plus détaillée un système de reconnaissance vocale comprenant un réseau de neurone multicadence selon l'invention. Ce système permet une reconnaissance de mots isolés, par exemple de digits isolés dans un système de commande vocale. Dans l'exemple illustré, le système de reconnaissance vocale comprend un classificateur comprenant lui même trois niveaux 20, 21, 22, chaque niveau comprenant un SMNN 3₂₀, 3₂₁, 3₂₂ à trois couches. La sortie du classificateur indique l'estimation de la classe la plus probable à priori (MAP - Maximum A Posteriori) à laquelle correspond le vecteur d'entrée. D'autres configurations, avec un nombre de niveaux et de couches dans chaque niveau différent peuvent cependant facilement être imaginés dans le cadre de cette invention.

Le signal sonore 23 à analyser est tout d'abord converti en un signal numérique par un convertisseur analogique-numérique 24 de type connu. Pour chaque trame du signal numérique de durée prédeterminée, par exemple 10 millisecondes, un vecteur vocal 2 est déterminé par le paramétriseur 27 de type également connu. Dans l'exemple illustré, le paramétriseur extrait des vecteurs à deux composants uniquement à partir de chaque trame ; en pratique, on utilisera de préférence des vecteurs comprenant un plus grand nombre de composants, par exemple 26, afin de fournir une représentation spatiotemporelle plus complète du signal sonore pendant la durée de chaque trame.

Les vecteurs vocaux 2 ainsi déterminés sont ensuite introduits successivement dans une ligne de registres à décalage 25-26. Chaque vecteur est tout d'abord introduit dans un registre 25, puis après un intervalle de trame z décalé dans le registre suivant. Dans l'exemple illustré, la ligne de registres à décalage comporte 3 registres contenant des vecteurs représentant trois intervalles de trame, par exemple 30 millisecondes. En pratique, on choisira de préférence une ligne à retard plus longue, comportant par exemple neuf registres successifs. Le registre à décalage est complété avec des vecteurs de remplissage (« dummy signal ») avant le premier vecteur et après le dernier vecteur de la séquence.

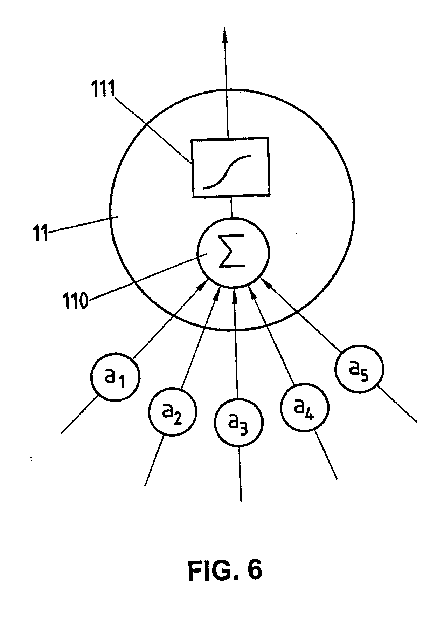

Des éléments de calcul (neurones) 11₂₀ dans une couche intermédiaire cachée sont connectés avec les registres 25 au moyen de synapses. Dans l'exemple illustré, la couche intermédiaire cachée comporte uniquement 4 éléments de calcul 11₂₀ ; en pratique on choisira de préférence un nombre d'éléments de calcul beaucoup plus grand, par exemple plusieurs centaines d'éléments de calcul. La figure 6 illustre plus en détail un exemple d'élément de calcul 11. De manière connue, les éléments de calcul 11 comportent un additionneur 110 pour effectuer une somme des composants des vecteurs dans les différents registres 25, la somme étant pondérée avec des coefficients de pondération a₁, a₂, .. aₙ déterminés au cours de la phase d'apprentissage du système. Une fonction de type connu, par exemple une fonction sigmoïde, est ensuite appliquée par un opérateur 111 à la somme calculée. Dans une variante préférentielle, le réseau est entièrement connecté, c'est-à-dire que tous les éléments de calcul 11₂₀ de la couche intermédiaire du premier niveau sont reliés par des synapses à tous les vecteurs vocaux de tous les registres 25 ; il est cependant également possible dans le cadre de cette invention d'imaginer des réseaux seulement partiellement connectés.

Le premier niveau comporte en outre une couche de sortie comprenant des éléments de calcul (neurones) 10₂₀ de type nouveau comprenant chacun un élément de calcul proprement dit 101₂₀ et un décimateur 102₂₀, comme indiqué ci-dessus. A nouveau, bien que l'exemple illustré comporte seulement trois éléments de calcul de sortie 10₂₀, on utilisera en pratique de préférence un nombre d'éléments supérieur, par exemple 24 éléments de sortie entraînés par exemple pour reconnaître 24 phonèmes différents. Chaque élément de calcul 101₂₀ est entièrement connecté à tous les éléments 11₂₀ de la couche intermédiaire. Les éléments de calcul 101 sont constitués de la même façon que les éléments 11 décrits ci-dessus, et, de manière connue, effectuent une somme des composants des vecteurs dans les différents neurones intermédiaires 11₂₀, la somme étant pondérée avec des coefficients de pondération déterminés au cours de la phase d'apprentissage du système. Une fonction de type connue, par exemple une fonction sigmoïde, est ensuite appliquée à la somme calculée. Les éléments de calcul 101₂₀ fournissent donc à chaque intervalle de trame un nouveau vecteur de sortie fonction des vecteurs vocaux mémorisés dans les registres 25.

Selon l'invention, ces signaux sont décimés par des décimateurs 102₂₀ fournissant en sortie des signaux à une cadence réduite par un facteur M₁. Les décimateurs fournissent donc en sortie du premier niveau 20 un vecteur numérique, à une cadence réduite par un facteur M₁ par rapport à la cadence des vecteurs vocaux introduits dans les registres 25. Si par exemple l'intervalle de trame des vecteurs vocaux à l'entrée du système est de 10 millisecondes et que le facteur de décimation M₁ est de deux, l'intervalle de trame des vecteurs de sortie à la sortie du premier niveau 20 sera de 20 millisecondes. Le vecteur de sortie à la sortie du premier niveau correspond par exemple des signaux indiquant la présence d'un phonème particulier identifié dans la séquence de vecteurs vocaux analysés.

Le vecteur de sortie fourni par le SMNN 3₂₀ au premier niveau 20 est fourni à l'entrée du SMNN 3₂₁ au second niveau 21, complété si nécessaire par des vecteurs de remplissage (« dummy signal »), et mémorisé dans des registres à décalage. De manière similaire à ce qui a été décrit ci-dessus pour le premier niveau, le registre à décalage comporte un ensemble de registres, le vecteur passant d'un registre à l'autre à chaque intervalle de trame du second niveau, par exemple toutes les 20 millisecondes (M₁ fois l'intervalle de trame du premier niveau). La figure illustre un exemple de deuxième niveaux avec trois registres d'entrée ; en pratique, on choisira de préférence un nombre de registres supérieur, par exemple 21 registres, aptes à mémoriser des vecteurs déduits à partir de 21*M₁ trames initiales, par exemple des vecteurs correspondant à 420 millisecondes de signal vocal. Le deuxième niveau 21 est ainsi en mesure de reconnaître des éléments phonologiques de durée beaucoup plus importante que le premier niveau, par exemple de reconnaître des parties de mots ou même des mots complets.

La structure du deuxième niveau est similaire à celle du premier niveau et ne sera donc pas décrite en détail ici. A nouveau, on utilisera de préférence un nombre de noeuds intermédiaire beaucoup plus élevé, par exemple 200 noeuds, et un nombre de noeuds de sortie également supérieur, par exemple 27 noeuds 10₂₁, correspondant par exemple à 27 parties de mots prédéfinies pouvant être identifiées à la sortie de ce deuxième niveau.

De la même façon que ci-dessus, le vecteur de sortie du second niveau 21 est décimé avec un facteur de décimation M₂ par des décimateurs 102₂₁, et fourni comme vecteur d'entrée au registre à décalage du troisième niveau 22. Dans une variante préférentielle, le troisième niveau comporte par exemple 26 éléments de registre d'entrée, 200 éléments de calcul intermédiaire et autant de sorties que d'éléments phonologiques devant être reconnus, par exemple dix sorties dans le cas où le système est utilisé uniquement pour la reconnaissance de digits de zéro à neuf. En continuant l'exemple numérique ci-dessus, si un nouveau vecteur est introduit toutes les 20 millisecondes dans le deuxième niveau 21 et que le facteur de décimation M₂ est de deux, un nouveau vecteur sera donc introduit dans le troisième niveau 22 toutes les 40 millisecondes. Le registre d'entrée comprenant dans cet exemple 17 cellules, le troisième niveau permet donc de reconnaître des éléments phonologiques à partir de vecteurs correspondant à 17*40 millisecondes = 680 millisecondes de signal. Les signaux de sortie du troisième niveau permettent ainsi d'identifier des éléments phonologiques relativement longs, par exemple des mots entiers.

Le classificateur décrit en relation avec la figure 5 comprend donc trois niveaux, la cadence de chaque niveau ainsi que la longueur du registre à décalage d'entrée étant adaptée à la reconnaissance d'éléments phonologiques de durée différente. Il est donc possible d'entraîner le système au cours d'une phase d'apprentissage en appliquant aux sorties de chaque niveau des vecteurs cibles correspondant aux éléments phonologiques devant être reconnus. Par exemple, il est possible lors de l'apprentissage d'appliquer des vecteurs cibles correspondant à des phonèmes sur la sortie du premier niveau 20, des vecteurs cibles correspondant à des syllabes, des triphones ou des portions de mots sur la sortie du deuxième niveau 21, et des vecteurs cibles correspondant à des mots entiers sur les sorties du niveau supérieur 22.

Avantageusement selon l'invention, il est aussi possible de n'imposer des vecteurs cibles correspondant à des mots entiers que sur les sorties du niveau supérieur 22, et d'exécuter l'algorithme de propagation inverse d'erreur EBP sur les trois niveaux, le système déterminant lui-même les vecteurs cibles des niveaux inférieurs 20 et 21. Cette variante a l'avantage d'éviter une décomposition nécessairement arbitraire de la parole en éléments phonologiques prédéfinis tels que phonèmes, triphones, syllabes, etc..

L'homme du métier comprendra que l'invention s'applique aussi au traitement de séquences de vecteurs vocaux multirésolution, c'est-à-dire dans lesquels des vecteurs ou des composants de vecteurs peuvent correspondre à des durées du signal vocal initial variables. Cette technologie est connue notamment dans le domaine du filtrage numérique sous le nom d'ondelettes, ou sous la terminologie anglo-saxonne de wavelets, et est notamment décrite dans l'ouvrage de Vetterli et al. mentionné ci-dessus. Les SMNN de l'invention permettent de contrôler la cadence des signaux délivrés et donc de resynchroniser aisément des séquences à cadence différente.

L'invention concerne en outre également des sytèmes comprenant uniquement un SMNN 3, c'est-à-dire des réseaux de neurones artificiels 1 dont le signal fourni en sortie est décimé par un décimateur 102.

Par ailleurs, l'invention concerne également des systèmes dans lesquels le taux de décimation des différents décimateurs peut être varié, par exemple pour adapter le réseau de neurones à différentes applications, ou de manière dynamique lors de la phase d'apprentissage ou même en fonction des vecteurs vocaux appliqués à l'entrée du système.

## Revendications

1. Système de réseaux neuronaux comprenant une pluralité de niveaux (20,21,22) de réseaux neuronaux interconnectés (10,11), chacun desdits réseaux neuronaux interconnectés comprenant un réseau neuronal spatiotemporel (1), lesdits niveaux comprenant un niveau d'entrée (20) auquel une séquence de s vecteurs d'entrée (2) peut être appliquée à au moins une première cadence,
dans lequel au moins deux niveaux (20/21/22) sont interconnectés par au moins un décimateur ([102]) pour réduire la cadence du signal délivré ou par au moins un interpolateur ([103]) pour augmenter la cadence du signal délivré.

2. Système selon selon la revendication 1, dans lequel au moins l'un desdits réseaux neuronaux spatiotemporels (1) est constitué par un perceptron multicouches à réponse impulsionnelle finie ou infinie.

3. Système selon l'une des revendications 1 à 2, dans lequel au moins l'un desdits réseaux neuronaux spatiotemporels (1) est constitué par un réseau neuronal à retard temporel.

4. Système selon l'une des revendications 1 à 3, dans lequel au moins l'un desdits réseaux neuronaux spatiotemporels (1) est constitué par un réseau neuronal récurrent.

5. Système selon l'une des revendications 1 à 4, dans lequel au moins l'un desdits réseaux neuronaux spatiotemporels (1) est constitué par un réseau gamma.

6. Système selon l'une des revendications 1 à 5, dans lequel la cadence des vecteurs introduits dans un desdits niveaux d'entrées (20) permet la reconnaissance d'éléments vocaux prédéterminés de durée brève dans ledit niveau.

7. Système selon l'une des revendications 1 à 6, dans lequel la cadence des vecteurs introduits dans un desdits niveaux d'entrées (20) permet la reconnaissance d'éléments linguistiques ou phonologiques prédéterminés dans ledit niveau intermédiaire.

8. Système selon l'une des revendications 1 à 7, dans lequel la cadence des vecteurs introduits dans un desdits niveaux d'entrées (20) permet la reconnaissance de mots prédéterminés dans ledit niveau.

9. Système selon l'une des revendications 1 à 8, dans lequel la cadence des vecteurs introduits dans un desdits niveaux d'entrées (20) permet la reconnaissance de triphones prédéterminés dans ledit niveau.

10. Système selon l'une des revendications 1 à 9, dans lequel la cadence des vecteurs introduits dans un desdits niveaux d'entrées (20) permet la reconnaissance de syllabes prédéterminées dans ledit niveau.

11. Système selon l'une des revendications 1 à 10, dans lequel la cadence des vecteurs introduits dans un desdits niveaux d'entrées (20) permet la reconnaissance de portion de phrases prédéterminées dans ledit niveau.

12. Système selon l'une des revendications 1 à 11, dans lequel la cadence des vecteurs introduits dans un desdits niveaux d'entrées (20) est d'une trame toutes les 10 millisecondes.

13. Système selon l'une des revendications 1 à 12, dans lequel la séquence desdits vecteurs introduits dans un desdits niveaux d'entrées (20) est à résolution variable.

14. Bloc logique (3) apte à être utilisé dans un système de réseau neuronaux, comprenant:
au moins un réseau neuronal spatiotemporel (1),
au moins une couche d'entrée et au moins une couche de sortie,
au moins un décimateur ([102]) ou un interpolateur ([103]) incluant au moins un filtre ([1020]) pour filtrer au moins un signal de sortie délivré par ledit réseau neuronal spatiotemporel et délivrer ce signal de sortie à une cadence differente à celle du signal d'entrée.

15. Bloc logique (3) selon la revendication 14, dans lequel ladite cadence du signal de sortie est inférieure à celle du signal d'entrée.

16. Bloc logique (3) selon la revendication 14, dans lequel ladite cadence du signal de sortie est supérieure à celle du signal d'entrée.

17. Bloc logique (3) selon l'une des revendications 14 à 16, dans lequel au moins l'un desdits réseaux neuronaux spatiotemporels (1) est constitué par un perceptron multicouches à réponse impulsionnelle finie ou infinie.

18. Bloc logique (3) selon l'une des revendications 14 à 17, dans lequel au moins l'un desdits réseaux neuronaux spatiotemporels (1) est constitué par un réseau neuronal à retard temporel.

19. Bloc logique (3) selon l'une des revendications 14 à 18, dans lequel au moins l'un desdits réseaux neuronaux spatiotemporels (1) est constitué par un réseau neuronal récurrent.

20. Bloc logique (3) selon l'une des revendications 14 à 19, dans lequel au moins l'un desdits réseaux neuronaux spatiotemporels (1) est constitué par un réseau gamma.

21. Bloc logique (3) selon l'une des revendications 14 à 20, dans lequel la cadence des vecteurs introduits dans ladite couche d'entrée permet la reconnaissance d'éléments vocaux prédéterminés de durée brève dans ledit niveau.

22. Bloc logique (3) selon l'une des revendications 14 à 21, dans lequel la cadence des vecteurs introduits dans ladite couche d'entrée permet la reconnaissance d'éléments linguistiques ou phonologiques prédéterminés dans ledit niveau intermédiaire.

23. Bloc logique (3) selon l'une des revendications 14 à 22, dans lequel la cadence des vecteurs introduits dans ladite couche d'entrée permet la reconnaissance de mots prédéterminés dans ledit niveau.

24. Bloc logique (3) selon l'une des revendications 14 à 23, dans lequel la cadence des vecteurs introduits dans ladite couche d'entrée permet la reconnaissance de triphones prédéterminés dans ledit niveau.

25. Bloc logique (3) selon l'une des revendications 14 à 24, dans lequel la cadence des vecteurs introduits dans ladite couche d'entrée permet la reconnaissance de syllabes prédéterminées dans ledit niveau.

26. Bloc logique (3) selon l'une des revendications 14 à 25, dans lequel la cadence des vecteurs introduits dans ladite couche d'entrée permet la reconnaissance de portion de phrases prédéterminées dans ledit niveau.

27. Bloc logique (3) selon l'une des revendications 14 à 26, dans lequel la cadence des vecteurs introduits dans ladite couche d'entrée est d'une trame toutes les 10 millisecondes.

28. Bloc logique (3) selon l'une des revendications 14 à 27, dans lequel la séquence desdits vecteurs introduits dans ladite couche d'entrée est à résolution variable.

29. Système de reconnaissance vocale comprenant une pluralité de blocs logiques (3), qui sont interconnectés, ledit système comprenant un niveau d'entrée (20) auquel une séquence de vecteurs d'entrée (2) est applicable à au moins une première cadence, et lesdits blocs logiques (3) comprenant:
au moins un réseau neuronal spatiotemporel (1),
au moins une couche d'entrée et au moins une couche de sortie,
au moins un décimateur ([102]) ou un interpolateur ([103]) incluant au moins un filtre ([1020]) pour filtrer au moins un signal de sortie délivré par ledit réseau neuronal spatiotemporel et délivrer ce signal de sortie à une cadence differente à celle du signal d'entrée.

30. Système de reconnaissance vocale selon la revendication 29, dans lequel ladite cadence du signal de sortie au moins d'un bloc logique (3) est inférieure à celle du signal d'entrée dudit bloc logique (3).

31. Système de reconnaissance vocale selon la revendication 29, dans lequel ladite cadence du signal de sortie au moins d'un bloc logique (3) est supérieure à celle du signal d'entrée dudit bloc logique (3).

32. Système de reconnaissance vocale selon l'une des revendications 29 à 31, dans au moins un des blocs logiques (3) au moins l'un desdits réseaux neuronaux spatiotemporels (1) est constitué par un perceptron multicouches à réponse impulsionnelle finie ou infinie.

33. Système de reconnaissance vocale selon l'une des revendications 29 à 32, dans au moins un des blocs logiques (3) au moins l'un desdits réseaux neuronaux spatiotemporels (1) est constitué par un réseau neuronal à retard temporel.

34. Système de reconnaissance vocale selon l'une des revendications 29 à 33, dans au moins un des blocs logiques (3) au moins l'un desdits réseaux neuronaux spatiotemporels (1) est constitué par un réseau neuronal récurrent

35. Système de reconnaissance vocale selon l'une des revendications 29 à 34, dans au moins un des blocs logiques (3) au moins l'un desdits réseaux neuronaux spatiotemporels (1) est constitué par un réseau gamma.

36. Système de reconnaissance vocale selon l'une des revendications 29 à 35, dans au moins un des blocs logiques (3) la cadence des vecteurs introduits dans la couche d'entrée dudit bloc logique (3) permet la reconnaissance d'éléments vocaux prédéterminés de durée brève dans ledit bloc logique (3).

37. Système de reconnaissance vocale selon l'une des revendications 29 à 36, dans au moins un des blocs logiques (3) la cadence des vecteurs introduits dans la couche d'entrée dudit bloc logique (3) permet la reconnaissance d'éléments linguistiques ou phonologiques prédéterminés dans ledit bloc logique (3) intermédiaire.

38. Système de reconnaissance vocale selon l'une des revendications 29 à 37, dans au moins un des blocs logiques (3) la cadence des vecteurs introduits dans la couche d'entrée dudit bloc logique (3) permet la reconnaissance de mots prédéterminés dans ledit bloc logique (3).

39. Système de reconnaissance vocale selon l'une des revendications 29 à 38, dans au moins un des blocs logiques (3) la cadence des vecteurs introduits dans la couche d'entrée dudit bloc logique (3) permet la reconnaissance de triphones prédéterminés dans ledit bloc logique (3).

40. Système de reconnaissance vocale selon l'une des revendications 29 à 39, dans au moins un des blocs logiques (3) la cadence des vecteurs introduits dans la couche d'entrée dudit bloc logique (3) permet la reconnaissance de syllabes prédéterminées dans ledit bloc logique (3).

41. Système de reconnaissance vocale selon l'une des revendications 29 à 20, dans au moins un des blocs logiques (3) la cadence des vecteurs introduits dans la couche d'entrée du bloc logique (3) permet la reconnaissance de portion de phrases prédéterminées dans ledit bloc logique (3).

42. Système de reconnaissance vocale selon l'une des revendications 29 à 41, dans au moins un des blocs logiques (3) la cadence des vecteurs introduits dans la couche d'entrée du bloc logique (3) est d'une trame toutes les 10 millisecondes.

43. Système de reconnaissance vocale selon l'une des revendications 29 à 42, dans au moins un des blocs logiques (3) la séquence des vecteurs introduits dans la couche d'entrée du bloc logique (3) est à résolution variable.

44. Système de reconnaissance vocale selon l'une des revendications 29 à 43, dans lequel lesdits vecteurs d'entrée (2) correspondent à des vecteurs vocaux.

45. Système de reconnaissance vocale selon l'une des revendications 29 à 44, comprenant un paramétriseur (27) pour déterminer lesdits vecteurs vocaux (2) à partir d'un signal vocal numérique.

46. Système de reconnaissance vocale selon l'une des revendications 29 à 45, ayant été entraîné avec un algorithme de propagation inverse d'erreur et des vecteurs cibles appliqués indépendamment à la sortie de chaque niveau des blocs logiques (3) ou à la sortie de chaque bloc logique (3).

47. Système de reconnaissance vocale selon l'une des revendications 29 à 46, ayant été entraîné avec un algorithme de propagation inverse d'erreur et un vecteur cible appliqué uniquement à la sortie globale du système.

## Patentansprüche

1. System von neuronalen Netzwerken, umfassend eine Vielzahl von Netzwerklayers (20, 21, 22), bestehend aus miteinander verbundenen neuronalen Netzwerken (10, 11), jedes der genannten miteinander verbundenen neuronalen Netzwerke umfasst ein spatiotemporelles neuronales Netzwerk (1), wobei die genannten Netzwerklayers einen Inputlayer (20) umfassen, an welchen eine Reihe von Inputvektoren (20) mit mindestens einer ersten Kadenz angelegt werden können,
in welchem System von neuronalen Netzwerken mindestens zwei Layers (20, 21, 22) durch mindestens ein Reduktionsmodul ([102]) zum Reduzieren der gelieferten Signalkadenz oder durch mindestens ein Erhöhungsmodul ([103]) zum Erhöhen der Kadenz des gelieferten Signales miteinander verbunden sind.

2. System nach Anspruch 1, in welchem mindestens eines der genannten spatiotemporellen neuronalen Netzwerke (1) zusammengesetzt ist aus einem Multilayerperceptron mit einer endlich oder unendlich konvertierenden Antwort.

3. System nach einem der Ansprüche 1 oder 2, in welchem mindestens eines der genannten spatiotemporellen neuronalen Netzwerke (1) aus einem zeitverzögerten neuronalen Netzwerk zusammengesetzt ist.

4. System nach einem der Ansprüche 1 bis 3, in welchem mindestens eines der genannten spatiotemporellen neuronalen Netzwerke (1) aus einem rückgekoppelten neuronalen Netzwerk zusammengesetzt ist.

5. System nach einem der Ansprüche 1 bis 4, in welchem mindestens eines der genannten spatiotemporellen neuronalen Netzwerke (1) aus einem Gamma-Netzwerk zusammengesetzt ist.

6. System nach einem der Ansprüche 1 bis 5, in welchem die Kadenz der Inputvektoren in die genannten Imputlayers (20) die Erkennung von vordefinierten Stimmelementen von kurzer Dauer in dem genannten Layer erlaubt.

7. System nach einem der Ansprüche 1 bis 6, in welchem die Kadenz der Inputvektoren in einen der genannten Inputlayers (20) die Erkennung von linguistischen oder phonologischen vordefinierten Elementen in den genannten Zwischenlayer erlaubt.

8. System nach einem der Ansprüche 1 bis 7, in welchem die Kadenz der Inputvektoren in einen der genannten Inputlayers (20) die Erkennung von vordefinierten Worten in den genannten Layer erlaubt.

9. System nach einem der Ansprüche 1 bis 8, in welchem die Kadenz der Inputvektoren in einen der genannten Inputlayers (20) die Erkennung eines vordefinierten Dreiklanges im genannten Layer erlaubt.

10. System nach einem der Ansprüche 1 bis 9, in welchem die Kadenz der Inputvektoren in einen der genannten Inputlayers (20) die Erkennung von vordefinierten Syllaben in diesen Layer erlaubt.

11. System nach einem der Ansprüche 1 bis 10, in welchem die Kadenz der Inputverktoren in einen der genannten Inputlayers (20) die Erkennung eines vordefinierten Satzteiles in den genannten Layer erlaubt.

12. System nach einem der Ansprüche 1 bis 11, in welchem die Kadenz der Inputvektoren in den genannten Inputlayer (20) ein Input alle 10 Millisekunden ist.

13. System nach einem der Ansprüche 1 bis 12, in welchem die Sequenz der genannten Vektoren, die in einen der genannten Inputlayers (20) eingegeben wird, von einer variablen Auflösung ist.

14. Eine logische Einheit (3) zur Benutzung in einem System von neuronalen Netzwerken, umfassend:
mindestens ein spatiotemporelles neuronales Netzwerk (1),
mindestens einen Inputlayer und mindestens einen Outputlayer,
mindestens ein Reduktionsmodul ([102]) oder ein Erhöhungsmodul ([103]), welche mindestens ein Filter ([1020]) zum Filtern von mindestens einem Outputsignal, welches Outputsignal durch das genannte spatiotemporelle neuronale Netzwerk geliefert wird, und zum Liefern dieses Outputsignals mit einer unterschiedlichen Kadenz zu dieser des Eingangssigals, umfasst.

15. Logische Einheit (3) nach Anspruch 14, in welcher die genannte Kadenz des Outputsignals tiefer ist als diese des Inputsignals.

16. Logische Einheit (3) nach Anspruch 14, in welcher die genannte Kadenz des Outputsignales höher ist als diese des Inputsignales.

17. Logische Einheit nach einem der Ansprüche 14 bis 16, in welcher mindestens eines der genannten spatiotemporellen neuronalen Netzwerke (1) aus einem Multilayerperceptron mit einer endlich oder unendlich konvertierenden Antwort zusammengesetzt ist.

18. Logische Einheit (3) nach einem der Ansprüche 14 bis 17, in welcher mindestens eines der genannten spatiotemporellen neuronalen Netzwerke (1) durch ein zeitverzögertes neuronales Netzwerk zusammengesetzt ist.

19. Logische Einheit (3) nach einem der Ansprüche 14 bis 18, in welcher mindestens eines der genannten spatiotemporellen neuronalen Netzwerke (1) aus einem rückgekoppelten neuronalen Netzwerk zusammengesetzt ist.

20. Logische Einheit (3) nach einem der Ansprüche 14 bis 19, in welcher mindestens eines der genannten spatiotemporellen neuronalen Netzwerke (1) aus einem Gamma-Netzwerk zusammengesetzt ist.

21. Logische Einheit (3) nach einem der Ansprüche 14 bis 20, in welcher die Kadenz der Inputvektoren in den genannten Inputlayer die Erkennung vordefinierter Stimmelemente von kurzer Zeitdauer in diesem Layer erlaubt.

22. Logische Einheit (3) nach einem der Ansprüche 14 bis 21, in welcher die Kadenz der Inputvektoren in den genannten Inputlayer die Erkennung von vordefinierten linguistischen oder phonologischen Elementen in dem genannten Zwischenlayer erlaubt.

23. Logische Einheit (3) nach einem der Ansprüche 14 bis 22, in welcher die Kadenz der Inputvektoren in den genannten Inputlayer die Erkennung von vordefinierten Worten im genannten Layer erlaubt.

24. Logische Einheit (3) nach einem der Ansprüche 14 bis 23, in welcher die Kadenz der Inputvektoren in den genannten Inputlayer die Erkennung von vordefinierten Dreiklängen im genannten Layer erlaubt.

25. Logische Einheit (3) nach einem der Ansprüche 14 bis 24, in welcher die Kadenz der Inputvektoren in den genannten Inputlayer die Erkennung von vordefinierten Sylladen im genannten Layer erlaubt.

26. Logische Einheit (3) nach einem der Ansprüche 14 bis 25, in welcher die Kadenz der Inputvektoren in den genannten Inputlayer die Erkennung von vordefinierten Satzteilen im genannten Zwischenlayer erlaubt.

27. Logische Einheit (3) nach einem der Ansprüche 14 bis 26, in welcher die Kadenz der Inputvektoren in den genannten Inputlayer ein Input alle 10 Millisekunden ist.

28. Logische Einheit (3) nach einem der Ansprüche 14 bis 27, in welcher die Sequenz der genannten Inputvektoren in den genannten Inputlayer eine variable Auflösung besitzt, die Erkennung von vordefinierten linguistischen oder phonologischen Elementen in den genannten Zwischenlayer erlaubt.

29. Spracherkennungssystem, umfassend eine Vielzahl von logischen Einheiten (3), die miteinander verbunden sind, welches System einen Inputlayer umfasst, bei welchem eine Sequenz von Inputvektoren (2) mit mindestens einer ersten Kadenz anlegbar ist, und welche genannten logischen Einheiten (3) umfassen:
mindestens ein spationtemporelles neuronales Netzwerk (1),
mindestens einen Inputlayer und mindestens einen Outputlayer,
mindestens ein Reduktionsmodul ([102]) oder ein Erhöhungsmodul ([103]), welche mindestens ein Filter ([1020]) zum Filtern von mindestens einem gelieferten Outputsignal durch das genannte spatiotemporelle neuronale Netzwerk und zum Liefern dieses Outputsignals mit einer unterschiedlichen Kadenz zu dieser des Eingangssigals, umfassen.

30. Spracherkennungssystem nach Anspruch 29, in welchem die genannte Kadenz des Outputsignals von mindestens einer logischen Einheit (3) tiefer ist als diese des Inputsignals der genannten logischen Einheit (3).

31. Spracherkennungssystem nach Anspruch 29, in welchem die genannte Kadenz des Outputsignals von mindestens einer logischen Einheit (3) höher ist als diese des Inputsignals der genannten logischen Einheit (3).

32. Spracherkennungssystem nach einem der Ansprüch 29 bis 31, in welchem mindestens eine der logischen Einheiten (3) mit mindestens einem der genannten spatiotemporellen neuronalen Netzwerken (1) aus einem Multilayerperceptron mit einer endlich oder unendlich konvertierenden Antwort zusammengesetzt ist.

33. Spracherkennungssystem nach einem der Ansprüche 29 bis 32, in welchem mindestens eine der logischen Einheiten (3) mit mindestens einem der genannten spatiotemporellen neuronalen Netzwerken (1) aus einem zeitverzögerten neuronalen Netzwerk zusammengesetzt ist.

34. Spracherkennungssystem nach einem der Ansprüche 29 bis 33, in welchem mindestens eine der logischen Einheiten (3) mit mindestens einem der genannten spatiotemporellen neuronalen Netzwerken (1) aus einem rückgekoppelten neuronalen Netzwerk zusammengesetzt ist.

35. Spracherkennungssystem nach einem der Ansprüche 29 bis 34, in welchem mindestens eine der logischen Einheiten (3) mit mindestens einem der genannten spatiotemporellen neuronalen Netzwerken (1) aus einem Gamma-Netzwerk zusammengesetzt ist.

36. Spracherkennungssystem nach einem der Ansprüche 29 bis 35, in welchem bei mindestens einer der logischen Einheiten (3) die Kadenz der Inputvektoren in den Inputlayer der genannten logischen Einheit (3) die Erkennung von vordefinierten Stimmelementen von kurzer Zeitdauer in der genannten logischen Einheit (3) erlaubt.

37. Spracherkennungssystem nach einem der Ansprüche 29 bis 36, in welchem bei mindestens einer der logischen Einheiten (3) die Kadenz der Inputvektoren in den genannten Inputlayer der logischen Einheit (3) die Erkennung von linguistischen oder logischen vordefinierten Elemenen in die genannte logische Zwischeneinheit (3) erlaubt.

38. Spracherkennungssystem nach einem der Ansprüche 29 bis 37, in welchem bei mindestens einer der logischen Einheiten (3) die Kadenz der Inputvektoren in den Inputlayer der genannten logischen Einheit (3) die Erkennung von vordefinierten Worten in der genannten logischen Einheit (3) erlaubt.

39. Spracherkennungssystem nach einem der Ansprüche 29 bis 38, in welchem bei mindestens einer der logischen Einheiten (3) die Kadenz der Inputvektoren in den Inputlayer der genannten logischen Einheit (3) die Erkennung eines vordefinierten Dreiklanges in der genannten logischen Einheit (3) erlaubt.

40. Spracherkennungssystem nach einem der Ansprüche 29 bis 39, in welchem bei mindestens einer der logischen Einheiten (3) die Kadenz der Inputvektoren in den Inputlayer der genannten logischen Einheit (3) die Erkennung von vordefinierten Syllaben in der genannten logischen Einheit (3) erlaubt.

41. Spracherkennungssystem nach einem der Ansprüche 29 bis 40, in welchem bei mindestens einer der genannten logischen Einheiten (3) die Kadenz der Inputvektoren in den Inputlayer der logischen Einheit (3) die Erkennung eines vordefinierten Teiles eines Satzes in der genannten logischen Einheit (3) erlaubt.

42. Spracherkennungssystem nach einem der Ansprüche 29 bis 41, in welchem bei mindestens einer der genannten logischen Einheiten (3) die Kadenz der Inputvektoren in den Inputlayer der logischen Einheit (3) ein Input alle 10 Millisekunden ist.

43. Spracherkennungssystem nach einem der Ansprüche 29 bis 42, in welchem bei mindestens einer der logischen Einheiten (3) die Sequenz der Inputvektoren in den Inputlayer der logischen Einheit (3) mit einer variablen Auflösung ist.

44. Spracherkennungssystem nach einem der Ansprüche 29 bis 43, in welchem die genannten Inputvektoren (2) Stimmvektoren entsprechen.

45. Spracherkennungssystem nach einem der Ansprüche 29 bis 44, umfassend ein Parametrisierungsmodul (27) zum Bestimmen der genannten Stimmvektoren (2) von einem numerischen Stimmsignal.

46. Spracherkennungssystem nach einem der Ansprüche 29 bis 45, weiches mit einem Algorithmus der umgekehrten Fehlerfortpflanzung (inverse error propagation) trainiert wurde und mit Zielvektoren, die unabhängig an den Ausgang jedes Outputlayers der logischen Einheiten (3) oder an den Ausgang jeder logischen Einheit (3) angelegt wurden, trainiert wurde.

47. Spracherkennungssystem nach einem der Ansprüche 29 bis 46, welches mit einem Algorithmus der umgekehrten Fehlerfortpflanzung und einem Zielvektor, der allein an den globalen Ausgang des Systems angelegt wurde, trainiert wurde.

## Claims

1. System of neural networks comprising a plurality of tiers (20, 21, 22) of interconnected neural networks (10, 11), each of said interconnected neural network comprising a spatiotemporal neural network (1), said tiers comprising an input tier (20) to which a sequence of input vectors (2) can be applied at at least a first rate,
in which system at least two tiers (20,21,22) are interconnected through at least one decimator ([102]) for reducing the rate of the delivered signal or through at least one interpolator ([103]) for increasing the rate of the delivered signal.

2. System according to claim 1, **characterised in that** at least one of said spatiotemporal neural networks (1) is made up of a finite or infinite multilayer pulse response perceptron.

3. System according to one of the claims 1 to 2, **characterised in that** at least one of said spatiotemporal neural networks (1) is made up of a time delay neural network.

4. System according to one of the claims 1 to 3, **characterised in that** at least one of said spatiotemporal neural networks (1) is made up of a recurrent neural network.

5. System according to one of the claims 1 to 4, **characterised in that** at least one of said spatiotemporal neural networks (1) is made up of a gamma network.

6. System according to one of the claims 1 to 5, **characterised in that** the rate of the vectors input in one of said input tiers (20) permits recognition of predetermined speech elements of brief duration in said tier.

7. System according to one of the claims 1 to 6, **characterised in that** the rate of the vectors input in one of said input tiers (20) permits recognition of predetermined linguistic or phonological elements in said intermediate tier.

8. System according to one of the claims 1 to 7, **characterised in that** the rate of the vectors input in one of said input tiers (20) permits recognition of predetermined words in said tier.

9. System according to one of the claims 1 to 8, **characterised in that** the rate of the vectors input in one of said input tiers (20) permits recognition of predetermined triphones in said tier.

10. System according to one of the claims 1 to 9, **characterised in that** the rate of the vectors input in one of said input tiers (20) permits recognition of predetermined syllables in said tier.

11. System according to one of the claims 1 to 10, **characterised in that** the rate of the vectors input in one of said input tiers (20) permits recognition of part of predetermined sentences in said tier.

12. System according to one of the claims 1 to 11, **characterised in that** the rate of the vectors input in one of said input tiers (20) is one frame every 10 milliseconds.

13. System according to one of the claims 1 to 12, **characterised in that** the sequence of said vectors introduced in one of said input tiers (20) is of variable resolution.

14. Logic unit (3) able to be used in a system of neural networks, comprising:
at least one spatiotemporal neural network (1),,
at least one input layer and at least one output layer,
at least one decimator ([102]) or one interpolator ([103]) including at least one filter ([1020]) to filter at least one output signal delivered by said spatiotemporal neural network and to deliver this output signal at a rate different from that of the input signal.

15. Logic unit (3) according to claim 14, **characterised in that** said rate of output signal is lower than that of the input signal.

16. Logic unit (3) according to claim 14, **characterised in that** said rate of output signal is higher than that of the input signal.

17. Logic unit (3) according to one of the claims 14 to 16, **characterised in that** at least one of said spatiotemporal neural networks (1) is made up of a finite or infinite multilayer pulse response perceptron.

18. Logic unit (3) according to one of the claims 14 to 17, **characterised in that** at least one of said spatiotemporal neural networks (1) is made up of a time delay neural network.

19. Logic unit (3) according to one of the claims 14 to 18, **characterised in that** at least one of said spatiotemporal neural networks (1) is made up of a recurrent neural network.

20. Logic unit (3) according to one of the claims 14 to 19, **characterised in that** at least one of said spatiotemporal neural networks (1) is made up of a gamma network.

21. Logic unit (3) according to one of the claims 14 to 20, **characterised in that** the rate of the vectors input in said input layer permits recognition of predetermined speech elements of brief duration in said tier.

22. Logic unit (3) according to one of the claims 14 to 21, **characterised in that** the rate of the vectors input in said input layer permits recognition of predetermined linguistic or phonological elements in said intermediate tier.

23. Logic unit (3) according to one of the claims 14 to 22, **characterised in that** the rate of the vectors input in said input layer permits recognition of predetermined words in said tier.

24. Logic unit (3) according to one of the claims 14 to 23, **characterised in that** the rate of the vectors input in said input layer permits recognition of predetermined triphones in said tier.

25. Logic unit (3) according to one of the claims 14 to 24, **characterised in that** the rate of the vectors input in said input layer permits recognition of predetermined syllables in said tier.

26. Logic unit (3) according to one of the claims 14 to 25, **characterised in that** the rate of the vectors input in said input layer permits recognition of part of predetermined sentences in said tier.

27. Logic unit (3) according to one of the claims 14 to 26, **characterised in that** the rate of the vectors input in said input layer is one frame every 10 milliseconds.

28. Logic unit (3) according to one of the claims 14 to 27, **characterised in that** the sequence of said vectors input in said input layer is of variable resolution.

29. Speech recognition system comprising a plurality of logic units (3), which are interconnected, said system comprising an input tier (20) to which a sequence of input vectors (2) is applied at at least a first rate, and said logic units (3) include:
at least one spatiotemporal neural network (1),
at least one input layer and at least one output layer,
at least one decimator ([102]) or one interpolator ([103]) including at least one filter ([1020]) for filtering at least one output signal delivered by said spatiotemporal neural network and to deliver this output signal at a different rate than that of the input signal.

30. Speech recognition system according to claim 29, **characterised in that** said rate of the output signal at least of one logic unit (3) is lower than that of the input signal of said logic unit (3).

31. Speech recognition system according to claim 29, **characterised in that** said rate of the output signal at least of one logic unit (3) is higher than that of the input signal of said logic unit (3).

32. Speech recognition system according to one of the claims 29 to 31, in at least one of the logic units (3) at least one of said spatiotemporal neural networks (1) is constituted by a finite or infinite multilayer pulse response perceptron.

33. Speech recognition system according to one of the claims 29 to 32, in at least one of the logic units (3) at least one of said spatiotemporal neural networks (1) is constituted by a time delay neural network.

34. Speech recognition system according to one of the claims 29 to 33, in at least one of the logic units (3) at least one of said spatiotemporal neural networks (1) is constituted by a recurrent neural network.

35. Speech recognition system according to one of the claims 29 to 34, in at least one of the logic units (3) at least one of said spatiotemporal neural networks (1) is constituted by a gamma network.

36. Speech recognition system according to one of the claims 29 to 35, in at least one of the logic units (3) thereof the rate of the vectors input in the logic unit (3) input layer permits recognition of predetermined speech elements of brief duration in said logic unit (3).

37. Speech recognition system according to one of the claims 29 to 36, in at least one of the logic units (3) thereof the rate of the vectors input in the logic unit (3) input layer permits recognition of predetermined linguistic or phonological elements in said intermediate logic unit (3)

38. Speech recognition system according to one of the claims 29 to 37, in at least one of the logic units (3) thereof the rate of the vectors input in the logic unit (3) input layer permits recognition of predetermined words in said logic unit (3).

39. Speech recognition system according to one of the claims 29 to 38, in at least one of the logic units (3) thereof the rate of the vectors input in the logic unit (3) input layer permits recognition of predetermined triphones in said logic unit (3).

40. Speech recognition system according to one of the claims 29 to 39, in at least one of the logic units (3) thereof the rate of the vectors input in the logic unit (3) input layer permits recognition of predetermined syllables in said logic unit (3).

41. Speech recognition system according to one of the claims 29 to 20 <sic. 40>, in at least one of the logic units (3) thereof the rate of the vectors input in input layer of the logic unit (3) permits recognition of part of predetermined sentences in said logic unit (3).

42. Speech recognition system according to one of the claims 29 to 41, in at least one of the logic units (3) the rate of the vectors input in the input layer of the logic unit (3) is one frame every 10 milliseconds.

43. Speech recognition system according to one of the claims 29 to 42, in at least one of the logic units (3) the sequence of the vectors input in the input layer of the logic unit (3) is of variable resolution.

44. Speech recognition system according to one of the claims 29 to 43, **characterised in that** said input vectors (2) correspond to speech vectors.

45. Speech recognition system according to one of the claims 29 to 44, comprising a parameterizer (27) for determining the said speech vectors (2) starting from a digital speech signal.

46. Speech recognition system according to one of the claims 29 to 45, having been trained with an error back propagation algorithm and target vectors applied independently at the output of each tier of the logic units (3) or at the output of each logic unit (3).

47. Speech recognition system according to one of the claims 29 to 46, having been trained with an error back propagation algorithm and a target vector applied only at the global output of the system.
